# EUROPÄISCHE PATENTSCHRIFT

(11) **EP 2 193 608 B1**
(45) Veröffentlichungstag und Bekanntmachung des Hinweises auf die Patenterteilung: **11.05.2011**
(21) Anmeldenummer: 08785049.1
(22) Anmeldetag: 24.07.2008
(51) Int. Cl.: H04B 5/02, G06K 7/00

(54) **VERFAHREN UND VORRICHTUNG ZUR KONTAKLOSEN ÜBERTRAGUNG VON DATEN VON UND/ODER ZU EINER VIELZAHL VON DATEN- ODER INFORMATIONSTRÄGERN, VORZUGSWEISE IN FORM VON RFID-TAGS**
METHOD AND DEVICE FOR THE CONTACT-FREE TRANSMISSION OF DATA FROM AND/OR TO A PLURALITY OF DATA OR INFORMATION CARRIERS, PREFERABLY IN THE FORM OF RFID TAGS
PROCÉDÉ ET DISPOSITIF DE TRANSFERT SANS CONTACT DE DONNÉES DEPUIS ET/OU VERS PLUSIEURS SUPPORTS DE DONNÉES OU D'INFORMATIONS ÉTANT DE PRÉFÉRENCE SOUS LA FORME D'ÉTIQUETTES RFID

(30) Priorität: 26.07.2007 DE 102007035006
(43) Veröffentlichungstag der Anmeldung: 09.06.2010
(73) Patentinhaber: Kathrein-Werke KG, 83022 Rosenheim (DE)
(72) Erfinder: SCHILLMEIER, Gerald, 81371 München (DE); LANKES, Thomas, 83024 Rosenheim (DE); MIERKE, Frank, 81667 München (DE)
(74) Vertreter: Flach, Dieter Rolf Paul
(86) Internationale Anmeldenummer: PCT/EP2008/006096
(87) Internationale Veröffentlichungsnummer: WO 2009/013001

(56) Entgegenhaltungen:
- US-A1- 2006 007 049
- US-A1- 2006 220 794
- US-A1- 2007 115 098

## Beschreibung

Die Erfindung betrifft ein Verfahren sowie eine Vorrichtung zur kontaktlosen Übertragung von Daten von und/oder zu einer Vielzahl von Daten- oder Informationsträgern, insbesondere in Form von RFID-Tags nach dem Oberbegriff des Anspruches 1 bzw. des Anspruches 11.

RFID-Verfahren zur kontaktlosen Identifikation von auf sogenannten RFID-Tags gespeicherten Informationen mittels magnetischer, elektrischer und/oder elektromagnetischer Energie- und Datenübertragung sind hinlänglich bekannt. Bei dem RFID-Verfahren (Radiofrequenz-Identifizierung) handelt es sich um eine Möglichkeit, auf tragbaren Datenträgern befindliche Informationen kontaktlos auszulesen und/oder Informationen auf dem tragbaren Datenträger zu schreiben. Zum Einsatz kommen sogenannte passive RFID-Tags, die ihre Energie immer aus dem elektrischen, magnetischen und/oder elektromagnetischen Feld einer Antenne erhalten, oder sogenannte aktive RFID-Tags, die mit einer eigenen (aufladbaren) Energieversorgung versehen sind. Allgemein handelt es sich bei den RFID-Tags um sogenannte Transponder.

Die in Rede stehenden RFID-Tags können für die unterschiedlichsten Einsatzzwecke verwendet werden, nämlich zur Erfassung (Detektion, Identifikation) von Gegenständen und /oder Produkten unterschiedlichster Art, beispielsweise zur Identifikation und Erfassung von Kleidungsstücken, beispielsweise T-Shirts etc.

Bekanntermaßen werden RFID-Tags und die zugehörigen Identifikationsverfahren so aufgebaut und umgesetzt, dass ein Schreib- und/oder Lesegerät (ein sogenannter Reader) vorgesehen ist. Der Reader ist an einer Antenne angeschlossen, worüber die entsprechenden Abfragesignale ausgesandt bzw die entsprechenden Informations-Antworten von Tags erhalten werden können. Beim RFID-Verfahren wird dabei häufig auf der gleichen Frequenz ausgesendet und empfangen (es kann allerdings auch auf unterschiedlichen Frequenzen gesendet und empfangen werden). Das von der Antenne des Schreib- und/oder Lesegerätes ausgesandte Signal kann gleichzeitig zur Energieversorgung der Tags dienen. Die entsprechenden Informationen werden aus dem Tag ausgelesen und an das Sende- und/oder Empfangsgerät zurückgesandt, das über eine zugeordnete Antenne das entsprechende Signal auffangen und auswerten kann. Es handelt sich also um einen bidirektionalen Sende-Empfangsweg in einem gleichen Frequenzbereich oder Frequenzband. Dazu sind in den unterschiedlichen Ländern gegebenenfalls unterschiedliche Frequenzbänder für diese Technik freigegeben.

Befinden sich mehrere Tags im Lesebereich eines RFID-Lese-und/oder Schreibgerätes, so kann es zu Kollisionen beim Lesen kommen. Von daher sind bereits verschiedene Antikollisionsverfahren vorgeschlagen worden, um ein richtiges Erfassen und Auslesen diverser Tags vornehmen zu können.

Es ist auch schon vorgeschlagen worden, den jeweils gerade ausgelesenen Tag nach dem Lesen "stumm" oder "inaktiv" zu schalten. Ein stumm oder inaktiv geschalteter Tag bleibt solange inaktiv bzw. stumm, bis er wieder direkt adressiert wird. Allerdings bleibt der Tag auch - wenn er "stumm" oder "inaktiv" geschaltet ist - aus Hochfrequenzsicht aktiv, indem er z.B. Leistung aufnimmt.

Problematisch ist insbesondere, wenn eine Vielzahl von Tags auf engem Raum nebeneinander angeordnet sind, beispielsweise deshalb, weil Tags zur Auszeichnung von T-Shirts oder dergleichen eingesetzt werden und die T-Shirts dabei unmittelbar aufeinander liegen. Hier kommt es zu einer gegenseitigen Beeinflussung der Tags, mit der Folge, dass manche Tags nur schlecht erreichbar und auslesbar sind.

Ein gattungsbildendes Verfahren sowie eine gattungsbildende Vorrichtung zur kontaktlosen Übertragung von Daten von und/oder zu einer Vielzahl von Daten- oder Informationsträgern, insbesondere in Form von RFID-Tags, ist aus der US 2007/0115098 A1 bekannt geworden. Dieses vorbekannte System umfasst eine Vielzahl von RFID-Tags, die über einen sogenannten Reader adressierbar sind. Dabei wird vom Reader zunächst ein erster Befehl ausgesandt, infolgedessen Informationen von einem ersten RFID-Tag ausgelesen werden. Danach erhält der ausgelesene RFID-Tag eine Instruktion, dass er in einen Zustand niedriger Signalstreuung (unsichtbar) umschalten soll. Anschließend wird vom Reader ein nächster RFID-Tag adressiert usw.. Da sich durch dieses Verfahren die Signalstärke der adressierten RFID-Tags erniedrigt, können mehrere bis dahin noch nicht ausgelesene Tags leichter angesprochen werden, da sie durch die "unsichtbar" geschalteten, bereits ausgelesenen Tags weniger abgeschirmt werden.

Jedes der RFID-Tags umfasst neben einer entsprechenden Antenneneinrichtung einen integrierten Schaltkreis, der mit der auf dem Tag befindlichen Antenneneinrichtung gekoppelt ist. Der integrierte Schaltkreis ist dabei so konfiguriert, dass er eine erste Antennenimpedanz aufweist, wenn er von dem betreffenden Reader angesprochen wird, und dann in eine zweite Impedanz umschaltet, nachdem die Verbindung zu dem betreffenden Reader hergestellt und die betreffenden Informationen ausgelesen wurden. Nachdem die vom Tag ausgelesenen Daten vom Reader empfangen wurden, wird vom Reader ein Befehl zu dem Tag übertragen, wodurch der Tag, entsprechend dem übertragenen Befehl, in einen unsichtbaren "Zustand" umgeschaltet wird.

Aufgabe der vorliegenden Erfindung ist es, ein verbessertes Verfahren sowie eine verbesserte Vorrichtung zu schaffen, die es ermöglicht, mehr Tags in einem Einzugsbereich einer oder mehrerer Antennen eines Lese- und/oder Schreibgerätes zu erreichen, anzusprechen und Daten aus einem Tag auszulesen oder auf einem Tag zu schreiben, also eine verbesserte Kommunikation zwischen Reader (also einem Schreib- und/oder Lesegerät) und dem jeweiligen Tag oder allgemein Transponder herstellen zu können.

Die Aufgabe wird bezüglich des Verfahrens entsprechend den im Anspruch 1 und bezüglich der Vorrichtung entsprechend den im Anspruch 11 angegebenen Merkmalen gelöst. Vorteilhafte Ausgestaltungen der Erfindung sind in den Unteransprüchen angegeben.

Durch die vorliegende Erfindung wird mit verblüffenden Mitteln eine deutliche Verbesserung geschaffen. Im Gegensatz zu herkömmlichen Lösungen ist es im Rahmen der Erfindung nunmehr möglich, auch in enger räumlicher Nähe zueinander positionierte Tags besser und sicherer auslesen und/ oder beschreiben zu können und/oder den Schreib- und Lesebereich (Einzugsbereich) des Readers mit zugehöriger Antenne oder zugehörigen Antennen bei gleicher Sende- und/ oder Empfangsleistung zu vergrößern.

Dabei geht die Erfindung ähnlich wie im Stand der Technik davon aus, dass eine Impedanz-Beschaltungs-Änderung auf den Tags (bzw. allgemein Transpondern) durchgeführt wird, und zwar nur für eine bestimmte Zeitdauer. Mit anderen Worten wird diese Impedanz-Beschaltungs-Änderung nur temporär durchgeführt.

Die erfindungsgemäße Verbesserung wird dadurch realisiert, dass die Umschaltung in den Standby-Impedanz-Zustand durch den Microchip realisiert wird, der so aufgebaut und/oder so programmiert ist, dass die Umschaltung von dem Microchip selbst initialisiert und/oder vom Microchip gesteuert durchgeführt wird. Im Gegensatz zum Stand der Technik erfolgt also die Umschaltung im den Standby-Impedanz-Zustand nicht durch ein von außen ausgelöstes und an den Tag übertragenes Signal, also nicht über ein vom Reader und der zugehörigen Antennen an den betreffenden Informationsträger (Tag) übermitteltes Signal.

Dadurch lässt sich eine noch höhere Sicherheit gewährleisten, da eine entsprechende Umschaltung in den anderen Impedanz-Zustand auf jeden Fall durchgeführt werden kann und nicht davon abhängt, ob der betreffende Tag tatsächlich noch vom Reader bzw. dessen Antenne ein entsprechendes Signal empfängt, und dass der betreffende Tag nicht von anderen Tags abgeschirmt wird etc..

Ferner ist im Rahmen der Erfindung vorgesehen, dass der Daten- oder Informationsträger, der eine entsprechende Information ausgelesen und/oder empfangen hat und dann in den Standby-Impedanz-Zustand umgeschaltet wurde, nach einer im Mikrochip gespeicherten und/oder vorwählbaren und/oder veränderbaren Zeitdauer oder durch direktes Ansprechen durch das Lese- und/oder Schreibgerät selbst in den Ausgangs-Impedanz-Zustand bzw. einen Kommunikations-Impedanz-Zustand zurückgeschaltet wird.

Ebenso kann die Rückschaltung in den Ausgangs-Impedanz-Zustand oder einen Kommunikations-Impedanz-Zustand erfolgen, wenn die Energieversorgung und/oder der Energiezustand des betreffenden Daten- oder Informationsträgers unter einen Minimalwert absinkt.

Bekanntermaßen senden die Tags ihre Information digitalisiert (und unter Umständen codiert) aus, indem zwischen verschiedenen - in der Regel zwei - Zuständen (beispielsweise zwischen Zustand "0" und dem Zustand "1") umgeschaltet wird. Dies erfolgt durch eine Umschaltung der Impedanz auf dem jeweiligen Tag oder Transponder, und zwar durch den auf dem Tag oder Transponder befindlichen Chip.

Nach Beendigung der notwendigen Kommunikation zwischen einem Reader und einem betreffenden Tag wird dieser Tag nunmehr in einen anderen Impedanz-Beschaltungs-Zustand umgeschaltet. Dieser Zustand ist so gewählt, dass der Tag oder Transponder in dieser nachfolgend auch als Standby-Impedanz-Zustand bezeichneten Konfiguration zu einer Verringerung einer unerwünschten Wechselwirkung mit dem Antennenfeld benachbarter Tags/Transponder führt, so dass über den Reader (also das Lese- und/oder Schreibgerät) und die zugehörige Antenneneinrichtung nächste Tags oder Transponder verbessert angesprochen und die darauf gespeicherten Informationen ausgelesen oder andere Informationen darauf geschrieben werden können. Dies kann zum Beispiel dadurch erfolgen, dass der Tag im Standby-Impedanz-Zustand im Antennenfeld des Readers weniger Energie aufnimmt, also dem Feld weniger Energie entzieht, oder dass im Standby-Impedanz-Zustand die Strom- und/oder Potentialverteilung auf den Tag dahingehend verändert wird, dass die Rückwirkung auf andere Tags oder Transponder reduziert oder optimiert wird.

Nachdem auch ein nächster Tag oder Transponder entsprechend ausgelesen ist, schaltet auch dieser in den sogenannten Standby-Impedanz-Modus um, und schaltet sich dadurch in einen für die anderen verbleibenden Tags oder Transponder eher günstigeren oder rückwirkungsärmeren Zustand um, insbesondere in einen für die anderen Tags eher "durchsichtigen" oder "nicht vorhandenen" Zustand.

Das erläuterte Verfahren lässt sich auch dann anwenden, wenn die Tags oder Transponder in ihrem Ausgangs- oder Bereitschaftszustand sogar einen sogenannten Ausgangs-Impedanz-Zustand an- oder einnehmen, der von den beiden Kommunikations-Impedanz-Zuständen während des Umschaltens von "0" auf "1" und umgekehrt unterschiedlich ist. Allerdings muss dies nicht zwangsläufig so sein, so dass der Ausgangs-Impedanz-Zustand auch zumindest einem der beiden Kommunikations-Impedanz-Zuständen für die Übersendung der "0" oder der "1" entsprechen kann.

Die zugehörigen Tags oder allgemein die zugehörigen Transponder sind also so aufgebaut, dass nach Abwicklung der erforderlichen Kommunikation mit dem Reader die gewünschte Umschaltung erfolgt, wobei die Umschaltung transpondergesteuert erfolgt, also durch den Transponder oder den RFID-Tag selbst.

Die erläuterte Umschaltung in einen Standby-Impedanz-Zustand muss aber nicht zwangsläufig gleich nach Abschluss der zumindest beiden Kommunikations-Impedanz-Zuständen erfolgen (Umschalten zwischen den Zuständen "0" und "1"), sondern kann auch zu einem etwas verzögerten, also verspäteten Zeitpunkt erfolgen. So kann beispielsweise - sofern vorhanden - ausgehend von dem Ausgangs-Impedanz-Zustand eine Umschaltung zum Kommunikations-Zustand erfolgen, bei welchem dann zwischen den beiden Kommunikations-Impedanz-Zuständen hin- und hergeschalten wird, um dann zunächst wiederum eine Umschaltung zum Ausgangs-Impedanz-Zustand oder erneut zunächst auf einen der beiden Kommunikations-Impedanz-Zuständen erfolgen, bevor dann letztlich eine Umschaltung zu dem Standby-Impedanz-Zustand durchgeführt wird. Ebenso ist es möglich, dass sich beispielsweise der Ausgangs-Impedanz-Zustand und Kommunikations-Impedanz-Zustand mehrfach abwechseln (beispielsweise bei einem wiederholten Informationsaustausch), oder sogar noch andere Zwischenimpedanz-Zustände von beliebiger zeitlicher Länge und/oder Häufigkeit eingenommen werden, bis letztlich eine Umschaltung zu dem Standby-Impedanz-Zustand erfolgt.

Die Erfindung wird nachfolgend anhand von Zeichnungen beispielhaft näher erläutert. Dabei zeigen im Einzelnen:
- Figur 1 :: eine schematische Darstellung eines RFID- Systems zur Übertragung von Daten von einer Vielzahl von Datenträgern, vorzugsweise in Form von RFID-Tags zu einem Reader unter Einsatz einer Antennenanordnung;
- Figuren 2a bis 2c :: eine schematische Draufsicht auf einen Tag/ Transponder mit Tag/Transponder-seitiger Di- polstruktur und Chip mit zugehöriger Hoch- frequenzimpedanz unter Darstellung dreier verschiedener Impedanz-Beschaltungs-Zustän- de;
- Figur 3 :: eine schematische Darstellung einer RFID- Transponder-Anordnung mit einer Vielzahl von Tags oder Transpondern unter Wiedergabe ei- nes normierten Antennen-Richtdiagramms bei Verwendung herkömmlicher Tags oder Trans- ponder; und
- Figur 4 :: eine entsprechende Darstellung zu Figur 3 unter Wiedergabe eines normierten Antennen- Richtdiagramms bei Anwendung des erfindungs- gemäßen Verfahrens bzw. der erfindungsgemä- ßen Tags oder Transponder.

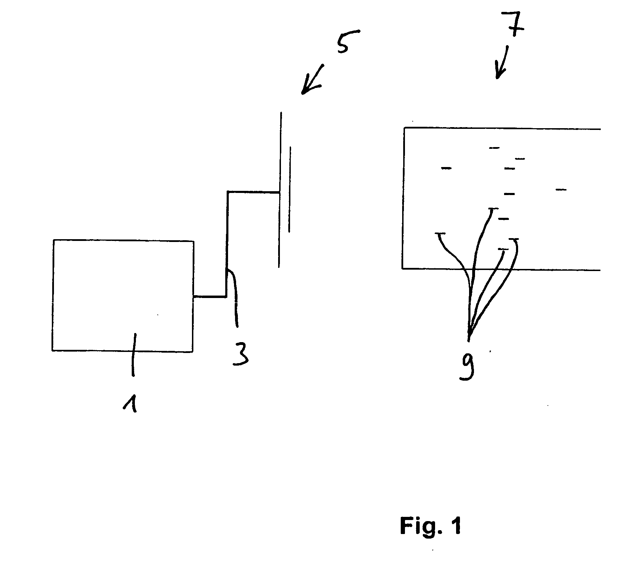

In Figur 1 ist in schematischer Darstellung eine Sendeund/oder Empfangseinheit 1, d.h. ein sogenannter Reader 1 gezeigt, der über eine Leitung oder ein Kabel 3 mit einer Antenne bzw. mit einer Antennenanordnung 5 verbunden ist.

Die Antennenanordnung besteht dabei vorzugsweise aus einer oder mehreren gemeinsamen Sende- und/oder Empfangsantennen. Im Abstand dazu soll beispielsweise eine Produktpalette oder allgemein eine Menge von Objekten oder Waren 7 vorgesehen sein, beispielsweise Bekleidungsstücke (T-Shirts oder dergleichen), die jeweils mit einem Tag oder Transponder 9 zur Erfassung (Detektion, Identifikation) versehen sind. Es kann sich dabei um einen Tag 9 oder allgemein um einen Transponder 9 handeln, der teilsweise auch als Daten- oder Informationsträger 9 bezeichnet wird. Die Tags oder Transponder 9 können dabei von gleicher oder unterschiedlicher Bauart sein. Die vorstehend nur beispielhaft genannten Waren wie T-Shirts liegen zum Beispiel aufeinander, so dass die einzelnen Tags 9 teilweise in sehr engem Abstand zueinander zu liegen kommen.

Die erwähnten Tags/Transponder 9 können mit einer eigenen Energieversorgung versehen sein (aktive Tags/Transponder). Sie sind grundsätzlich so aufgebaut, dass sie mit einer in Figur 1 nicht näher dargestellten Tag-Antenne zum Empfang von Signalen eines Readers mit einer integrierten Schaltungsanordnung auf dem Substrat oder Trägermaterial versehen sind, in welcher entsprechende Informationen gespeichert sind, die bekannterweise durch einen Reader ausgelesen oder beschrieben werden können.

Bei der Verwendung von passiven Tags/Transponder 9, die also über keine eigene Energieversorgung verfügen, erhalten die Tags/Transponder die Energie durch das Sendesignal des Lese-/Schreibgerätes (Readers), um darauf die auf ihnen gespeicherten Informationen auszulesen und an den Reader zu übersenden.

Auch wenn im Folgenden von "Tags" gesprochen wird, handelt es sich dabei allgemein um Transponder, also um aktive oder passive Informationsträger mit einer eigenen Energieversorungen oder ohne eine eigene Energieversorgung; auf denen ein Chip und eine entsprechende Transponder-Antenne vorgesehen sind.

Bei Anwendung der erläuterten Technik im RFID-Bereich, der länderabhängig differieren kann, handelt es sich um eine Technik, bei der Sende- und Empfangssignale in der Regel mit gleicher Frequenz oder im gleichen Frequenzband übermittelt werden, beispielsweise im Bereich von 860 MHz bis 960 MHz. Die Erfindung ist aber auch in völlig anderen Bereichen umsetzbar, beispielsweise im UHF-Bereich um 434 MHz oder beispielsweise im HF-Bereich bei z.B. 13,56 MHz oder im Mikrowellenbereich bei 2,45 GHz. Die Erfindung ist aber grundsätzlich auch in anderen Frequenzbereichen anwend- und umsetzbar.

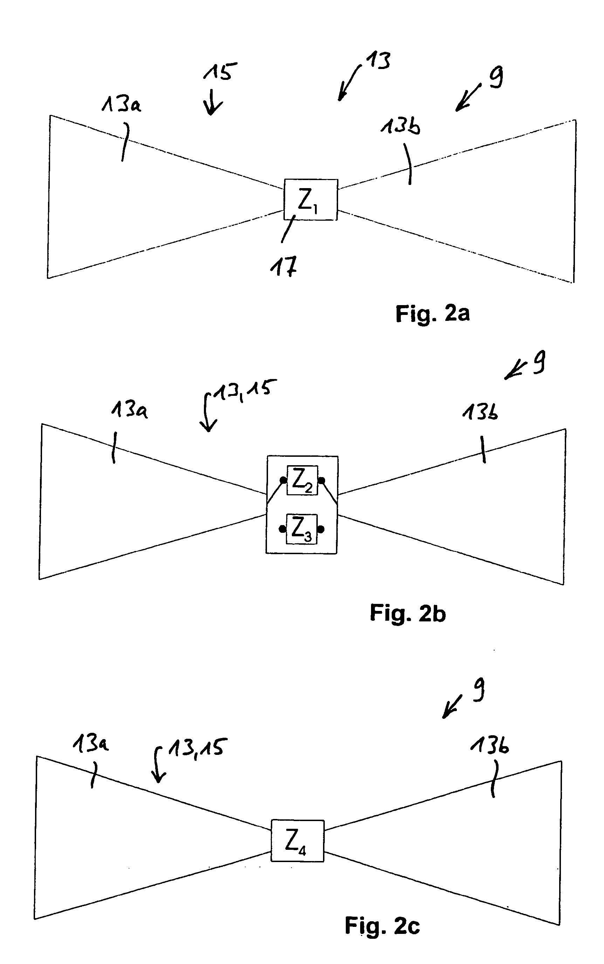

Anhand von Figuren 2a bis 2c sind in schematischer Draufsicht Beispiele für einen Tag oder Transponder 9 wiedergegeben, wobei letztlich nur eine dipolförmige Antennenstruktur 13 mit zugehörigen Dipolhälften 13a und 13b gezeigt ist, zusammen mit einem nachfolgend noch erwähnten Mikrochip 17. Mit anderen Worten ist die Umrandung oder das sogenannte Substrat des Informationsträgers 9, also insbesondere des Tags/Transponders 9, der Übersichtlichkeit halber nicht dargestellt.

In den Zeichnungen ist als Antenne eine Dipolantenne mit zwei Dipolhälften 13a und 13b gezeigt. Es können aber auch andere Antennentypen eingesetzt werden, die nicht einmal aus Dipolstrahlern bestehen müssen (z.B. in Form einer Schlitzantenne etc.). Ferner umfasst der Tag einen Chip oder Mikrochip 17.

Bevorzugt ist der Aufbau derart; dass ein entsprechender Tag oder Transponder einen Ausgangszustand Z1 mit einer bestimmten Hochfrequenz-Impedanz Z1 für den Chip aufweist (Figur 2a).

Empfängt nunmehr ein derartiger Informationsträger 9, z.B. in der Form eines Tags oder eines Transponders 9, ein Signal (beispielsweise ein sogenanntes Abfrage- oder Lesesignal oder auch beispielsweise ein sogenanntes Schreibsignal) von einem Reader 1, das eine Antwort erfordert, so schaltet der Mikrochip 17 in einen geänderten Impedanz-Zustand um, den er für die Kommunikation mit dem Reader 1 benötigt. Mit anderen Worten schaltet der Mikrochip 17 zwischen zwei Impedanzen Z2 und Z3 um, d.h. hin und her, um je nach Impedanzzustand Z2 bzw. Z3 das Signal "O" oder das Signal "1" auszusenden, also zwischen diesen Signalen umzuschalten. Dadurch wird die digitale Kommunikation zwischen Reader und Tag/Transponder 9 aufrechterhalten.

Ist diese Kommunikation abgeschlossen, d.h. die entsprechenden Informationen aus dem Tag/Transponder 9 ausgelesen bzw. diese Informationen vom Reader 1 empfangen und/oder ausgewertet, soll nunmehr im Rahmen der Erfindung der Mikrochip 17 in einen weiteren, im gezeigten Ausführungsbeispiel dritten Impedanzzustand Z4 umschalten (Figur 2c). Dieser dritte Impedanzzustand Z4 ist so gewählt, dass die unerwünschte Wechselwirkung des Tags oder Transponders, dessen Kommunikation mit dem Reader bereits abschlossen ist, mit dem Antennenfeld benachbarter Tags oder Transponder reduziert wird. Dies kann beispielsweise dadurch erfolgen, dass der Tag/Transponder 9 in diesem Zustand nur noch deutlich weniger Energie aus dem vom Reader über die zugehörige Readerantenne 5 ausgestrahlten elektromagnetischen Feld aufnimmt als ein anderer Tag/Transponder 9, der sich noch im Ausgangszustand Z1 bzw. im Kommunikations-zustand mit dem wahlweise Impedanzzustand Z2 bzw. Z3 befindet.

Durch diesen Schaltmechanismus wird der bereits zuvor ausgelesene Tag/Transponder quasi als eher rückwirkungsarm (also eher als "durchsichtig" oder eher als "nicht vorhanden") aus Sicht des benachbarten Tags charakterisiert, mit der Folge, dass nunmehr benachbarte nächste Tags/Transponder sehr viel besser mit dem Reader kommunizieren können, da die die Kommunikation beeinträchtigende Störung (Einflussnahme auf die Energieaufnahme) einiger benachbarter Tags reduziert ist. Im Rahmen der Erfindung ist also sichergestellt, dass weitere, vor allem benachbarte Tags /Transponder durch die Umschaltung des jeweils ausgelesenen Tags/Transponders 9 und Umschaltung in den erwähnten Standby-Impedanz-Zustand durch diesen Tag/Transponder quasi geringer abgeschirmt oder nachteilig beeinflusst werden, die Kommunikation mit einem benachbarten Tag /Transponder 9 und dem Reader also verbessert wird.

Die Ausgangs-Impedanz Z1 muss aber nicht zwangsläufig zu den Kommunikations-Impedanzen Z2 und Z3 unterschiedlich sein. Mit anderen Worten kann die Ausgangs-Impedanz Z1 auch der Impedanz Z2 oder Z3 entsprechen. Auch in diesem Fall werden die Vorteile dadurch realisiert, dass nach dem Austausch der Information der jeweilige Mikrochip in einen Impedanz-Zustand Z4 umschaltet.

Es wird ferner angemerkt, dass die erwähnten Hochfrequenzimpedanzen sowohl lineares als auch nicht-lineares Verhalten aufweisen können, insbesondere in Bezug auf die Leistung. Ferner wird angemerkt, dass die Abfolge ausgehend von der Ausgangs-Impedanz Z1 über die Kommunikations-Impedanzen Z2 und Z3 nach dem Austausch von Informationen zwischen Tag/Transponder 9 und Reader 1 nicht zwangsläufig direkt in den nächsten Impedanz-Zustand Z4 umschalten muss. Es ist auch möglich, vor dem Umschalten in den Standby-Impedanz-Zustand Z4 nochmals in einen Ausgangs-Impedanz-Zustand Z1 und dann erst in den Standby-Impedanz-Zustand oder zunächst nochmals vom Ausgangs-Impedanz-Zustand über einen oder mehrere Kommunikations-Impedanz-Zustände Z2, Z3 zu einem späteren Zeitpunkt in den Standby-Zustand umzuschalten. Diese vorausgehenden Umschaltungen können bei Bedarf auch mehrfach erfolgen, bis letztlich der Standby-Impedanz-Zustand erreicht ist.

Die erläuterte Umschaltung in den Standby-Impedanz-Zustand Z4 wird dadurch realisiert und sichergestellt, dass der Mikrochip 17 entsprechend aufgebaut und/oder programmiert ist, und somit die Umschaltung von dem Mikrochip 17 selbst initialisiert und/oder zumindest vom Mikrochip 17 gesteuert durchgeführt wird. Im Gegensatz zum Stand der Technik ist also nicht vorgesehen, dass die Umschaltung in den Standby-Impedanz-Zustand Z4 durch ein entsprechendes Signal von außen ausgelöst wird, also insbesondere nicht durch ein entsprechendes Signal, welches über den Reader 1 und die zugehörige Antenne 5 an den betreffenden Informationsträger 9 übermittelt wird.

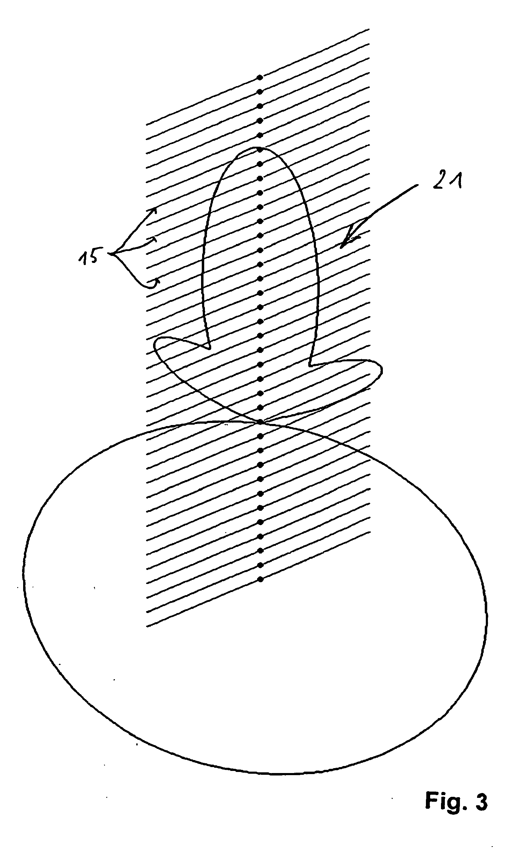

In Figur 3 ist schematisch dargestellt, wie ein normiertes Antennen-Richtdiagramm 21 eines Tags-/Transponders aussehen kann, wenn beispielsweise in dichter Parallellage zueinander eine Vielzahl von Tags/Transpondern mit entsprechenden Tags-/Transponderantennen 15 angeordnet sind. Daraus ist zu ersehen, dass ein Antennen-Richtdiagramm entsteht, welches zur Folge hat, dass die Transponder oder Tags teilsweise nur vergleichsweise schlecht ein entsprechendes vom Reader kommendes Signal empfangen können bzw. Informationen an den Reader senden können.

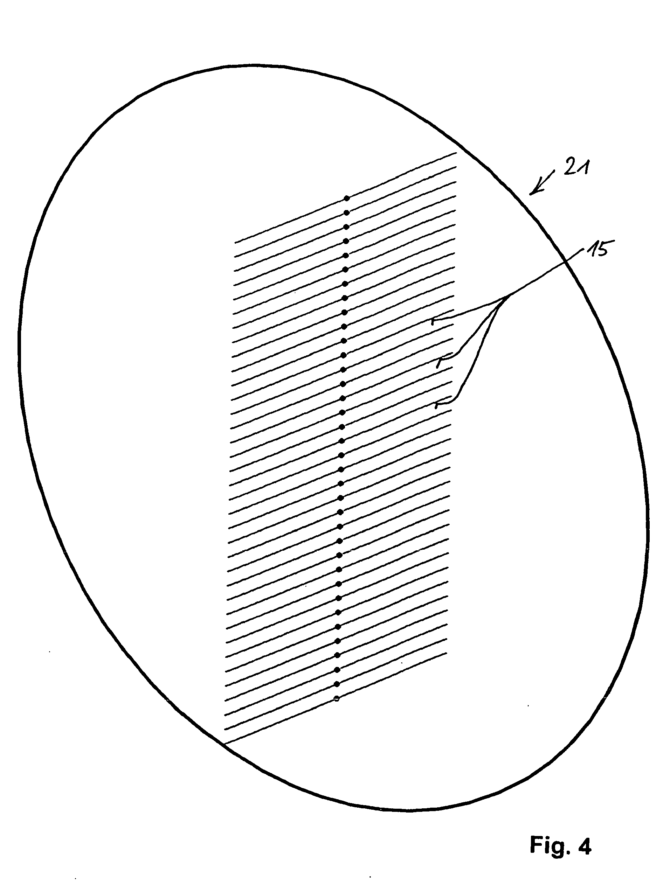

Würden beispielsweise bestimmte Tags/Transponder verwendet werden, die im Rahmen der Erfindung nach der Übermittlung der gewünschten Information an den Reader in dem Impedanz-Zustand Z4 umschalten, hätte dies ein verbessertes Antennen-Richtdiagramm anderer Tags/Transponder in der Umgebung gemäß Figur 4 zur Folge. Während beispielsweise in der Darstellung gemäß Figur 3 das Antennenrichtdiagramm eines Informationsträgers dargestellt ist, und zwar zu einem Zeitpunkt, in welchem sich alle weiteren (restlichen) Tags /Transponder beispielsweise im Ausgangs-Impedanz-Zustand oder im Kommunikations-Impedanz-Zustand befinden (auf jeden Fall nicht in dem erfindungsgemäß vorgesehenen Standby-Impedanz-Zustand Z4) betrifft das in Figur 4 gezeigte normierte Antennen-Richtdiagramm ein erfindungsgemäßes Beispiel. Im Gegensatz zu Figur 3 zeigt Figur 4 ein Ausführungsbeispiel für ein normiertes Antennen-Richtdiagramm eines Tags/Transponders, wenn sich beispielsweise nach dem Auslesen der Informationen alle restlichen Tags/Transponder 9 in dem Standby-Impedanz-Zustand Z4 befinden. Daraus ist zu ersehen, dass die gleichen angeordneten Transponder/Tags nunmehr aus bestimmten Richtungen ein sehr viel stärkeres Signal empfangen können und damit die Kommunikation zwischen Reader und Transponder/Tag deutlich verbessert ist. Aus dem Vergleich zwischen Figur 3 und Figur 4 geht auch hervor, dass natürlich durch den verbesserten Empfang von Signalen und elektromagnetischen Wellen, also im Energiefeld, der Reader mit den einzelnen Tags/Transpondern nicht nur besser und damit sicherer kommunizieren kann, sondern dass auch das "Einzugsfeld" zum Auslesen und Erfassen aller Tags/Transponder vergrößert wird, da die Signale des Readers in dieser Konfiguration gemäß Figur 4 selbst noch dann gut empfangen werden können, wenn die elektrische Feldstärke mit zunehmenden Abstand von der Readerantenne abnimmt.

Aus der erläuterten Schilderung ergibt sich, dass die Umschaltung in den Standby-Impedanz-Zustand Z4 nur für eine gewisse Zeitdauer, also nur temporär, erfolgt, um in diesem Zeitraum durch Veränderung der Hochfrequenz-Impedanz zu einer Reduzierung der unerwünschten Wechselwirkung mit dem Antennenfeld benachbarter Tags/Transponder beizutragen. Da also die Empfangbarkeit und Auslesbarkeit der einzelnen Tags/Transponder letztlich von der Impedanz der anderen Tags/Transponder abhängt, kann durch Umschaltung der Tags/Transponder im geschilderten Maße die Erreichbarkeit und das Auslesen von oder das Schreiben auf anderen Tags verbessert werden. Wenn die empfangene Energie und/oder wenn die noch gespeicherte Energie unter einen Minimalwert oder Schwellenwert fallen sollte, kann die Anordnung derart sein, dass der Transponder/Tag, also allgemein der Daten- oder Informationsträger, wieder in seinen Ausgangsimpedanzzustand zurück fällt, in welchem er wieder mehr Energie aus dem vom Reader mit der zugehörigen Antenne ausgestrahlten Energiefeld entnehmen kann.

Ebenfalls möglich ist, dass die Transponder/Tags den Standby-Impedanz-Zustand Z4 von vorne herein nur für eine bestimmte, festgelegte Zeitspanne annehmen. Diese zeitliche Dauer könnte dabei beispielsweise einen festen Wert (der im Mikrochip gespeichert ist) besitzen oder auch jeweils vom Reader während der Kommunikation zwischen Reader und Transponder übertragen werden. Mit anderen Worten kann der Daten- oder Informationsträger 9, also insbesondere der Tag, der eine entsprechende Information ausgelesen und /oder empfangen hat und dann in den Standby-Impedanz-Zustand Z4 umgeschaltet wurde, nach einer im Mikrochip 17 gespeicherten und/oder vorwählbaren und/oder veränderbaren Zeitdauer wieder in seinen Ausgangs-Impedanz-Zustand Z1 zurückgeschaltet werden.

Eine weitere Möglichkeit besteht darin, dass die Tags /Transponder im Standby-Impedanz-Zustand Z4 durch direktes Ansprechen durch den Reader in den Ausgangs-Impedanz-Zustand bzw. den Kommunikations-Impedanz-Zustand überführt werden, sofern sie dafür ausreichende Energie besitzen bzw. aus dem vorhandenen Feld entnehmen können.

## Patentansprüche

1. Verfahren zur kontaktlosen Übertragung von Daten von und/oder zu einer Vielzahl von Daten- oder Informationsträgern (9), vorzugsweise in Form von RFID-Tags oder Transpondern, mit folgenden Verfahrensschritten:
- Senden eines oder mehrerer Abfrage- und/oder Schreibsignale an einen oder an mehrere Daten- oder Informationsträger (9), insbesondere über eine zu einem Leseund/oder Schreibgerät (1) gehörende oder daran angeschlossene Antennenanordnung (5),
- Auslesen von Informationen von einem und/oder Schreiben von Informationen auf einem einzelnen Daten- oder Informationsträger (9), indem von dem Daten- oder Informationsträger (9) ein entsprechendes Informationssignal über eine auf dem Daten- oder Informationsträger (9) befindlichen Antenne (15) ausgesendet und/oder empfangen wird,
- nach dem Austausch einer Information zwischen einem Lese- und/oder Schreibgerät (1) und einem Daten- oder Informationsträger (9) wird dieser zur Reduzierung einer unerwünschten Wechselwirkung mit dem Antennenfeld benachbarter Daten- oder Informationsträger (9) in einen Standby-Impedanz-Zustand (Z4) umgeschaltet, der sich von einem Ausgangs-Impedanz-Zustand (Z1) sowie Kommunikations-Impedanz-Zuständen (Z2, Z3) während der Aussendung eines Informationssignals vom Datenoder Informationsträger (9) bzw. dem Empfang eines Informationssignals durch den Daten- oder Informationsträger (9) unterscheidet,
**gekennzeichnet durch** die folgenden weiteren Merkmale:
- die Umschaltung in den Standby-Impedanz-Zustand (Z4), insbesondere nach Abwicklung der Kommunikation mit dem Lese- und/oder Schreibgerät (1), erfolgt initialisiert und/oder gesteuert **durch** den Daten- oder Informationsträger (9) selbst, und
- der Daten- oder Informationsträger (9), der eine entsprechende Information ausgelesen und/oder empfangen hat und dann in den Standby-Impedanz-Zustand (Z4) umgeschaltet wurde, wird nach einer im Mikrochip (17) gespeicherten und/oder vorwählbaren und/oder veränderbaren Zeitdauer oder **durch** ein Aktivierungssignal vom Lese- und/oder Schreibgerät (1) oder dann in seinen Ausgangs-Impedanz-Zustand (Z1) oder in zumindest einen der beiden Kommunikations-Impedanz-Zustände (Z2, Z3) zurückgeschaltet, wenn die Energieversorgung und/oder der Energiezustand des betreffenden Daten- oder Informationsträgers (9) unter einen Minimalwert absinkt.

2. Verfahren nach Anspruch 1, **dadurch gekennzeichnet, dass** der Standby-Impedanz-Zustand (Z4) so gewählt ist, dass der Daten- oder Informationsträger (9) in diesem Zustand weniger Energie von einer Reader-Antenne (5) aufnimmt als in dem Ausgangs-Impedanz-Zustand (Z1) und/oder in dem Kommunikations-Impedanz-Zustand (Z2, Z3), in welchem der Datenoder Informationsträger (9) durch Umschalten zwischen zumindest zwei Impedanz-Zuständen (Z2, Z3) digitalisierte Signale aussendet.

3. Verfahren nach Anspruch 1 oder 2, **dadurch gekennzeichnet, dass** der Standby-Impedanz-Zustand (Z4) so gewählt ist, dass der Daten- oder Informationsträger (9) in diesem Zustand eine Strom- und/oder Potentialverteilung auf der Antenne (15) aufweist, die eine geringere Wechselwirkung mit dem Antennenfeld benachbarter Daten- oder Informationsträger (9) bewirkt als im Ausgangs-Impedanz-Zustand (Z1) und/oder im Kommunikations-Impedanz-Zustand (Z2, Z3).

4. Verfahren nach einem der Ansprüche 1 bis 3, **dadurch gekennzeichnet, dass** der Daten- oder Informationsträger (9) einen Ausgangs-Impedanz-Zustand (Z1) aufweist, der unterschiedlich ist zu den Kommunikations-Impedanz-Zuständen (Z2, Z3) während der Kommunikations-Phase.

5. Verfahren nach einem der Ansprüche 1 bis 4, **dadurch gekennzeichnet, dass** der Daten- oder Informationsträger (9) einen Ausgangs-Impedanz-Zustand (Z1) aufweist, der einem der beiden Kommunikations-Impedanz-Zuständen (Z2, Z3) entspricht, die der Daten- oder Informationsträger (9) während der Kommunikations-Phase einnimmt.

6. Verfahren nach einem der Ansprüche 1 bis 5, **dadurch gekennzeichnet, dass** ein Daten- oder Informationsträger (9), der eine entsprechende Information ausgelesen oder empfangen hat, in einen Standby-Impedanz-Zustand (Z4) so umgeschaltet wird, in welchem er weniger Energie bezüglich von anderen Daten- oder Informationsträgern (9) ausgesandten Signalen aufnimmt als ein Daten- oder Informationsträger (9), der sich in einem der beiden Kommunikations-Impedanz-Zuständen (Z2, Z3) oder im Ausgangs-Impedanz-Zustand (z1) befindet.

7. Verfahren nach einem der Ansprüche 1 bis 6, **dadurch gekennzeichnet, dass** ein Daten- oder Informationsträger (9), der eine entsprechende Information ausgelesen oder empfangen hat, in einen Standby-Impedanz-Zustand (Z4) so umgeschaltet wird, in welchem der Zustand der Strom- und/ oder Potentialverteilung auf der Antenne eine geringere Wechselwirkung mit dem Antennenfeld benachbarter Datenund/oder Informationsträger (9) bewirkt, verglichen mit einem Daten- oder Informationsträger (9), der sich in einem der beiden Kommunikations-Impedanz-Zuständen (Z2, Z3) oder im Ausgangs-Impedanz-Zustand (Z1) befindet.

8. Verfahren nach einem der Ansprüche 1 bis 7, **dadurch gekennzeichnet, dass** nach dem Auslesen oder Empfangen eines Informationssignals von dem Daten- oder Informationsträger (9) vor der Umschaltung in den Standby-Impedanz-Zustand (Z4) eine oder mehrere weitere Umschaltungen zunächst zum Ausgangs-Impedanz-Zustand (Z1) und gegebenenfalls zu zumindest einem der beiden Kommunikations-Impedanz-Zuständen (Z2, Z3) erfolgt.

9. Verfahren nach einem der Ansprüche 1 bis 8, **dadurch gekennzeichnet, dass** eine Umschaltung in den Standby-Impedanz-Zustand (Z4) von einem auf dem Daten- oder Informationsträger (9) vorgesehenen Mikrochip durchgeführt wird.

10. Verfahren nach einem der Ansprüche 1 bis 9, **dadurch gekennzeichnet, dass** die Umschaltung in den Standby-Impedanz-Zustand (Z4) ohne ein vom Lese- und/oder Schreibgerät (1) vorliegendes Steuersignal erfolgt.

11. Vorrichtung zur kontaktlosen Übertragung von Daten von einer Vielzahl von Daten- oder Informationsträgern (9), vorzugsweise in Form von RFID-Tags oder Transpondern, mit folgenden Merkmalen:
- es ist ein Lese- und/oder Schreibgerät (1) vorgesehen, welches eine oder mehrere Antennen (5) umfasst oder an welchem eine oder mehrere Antenne (5) anschließbar sind, worüber Abfrage- und/oder Schreibsignale an einen oder mehrere Daten- oder Informationsträger (9) aussendbar sind,
- es ist eine Mehrzahl von Daten- oder Informationsträgern (9) vorgesehen, auf denen Informationen enthalten und/oder gespeichert sind, die vom Daten- oder Informationsträger (9) insbesondere nach Empfang eines Abfragesignals durch Aussenden eines Informationssignals auslesbar sind, oder auf denen insbesondere nach Empfang eines Schreibsignals Informationen abspeicherbar sind,
- der Daten- oder Informationsträger (9) umfasst einen Mikrochip (17), der unterschiedliche Impedanz-Zustände (Z1; Z2, Z3; Z4) einnehmen kann, und der nach dem Aussenden und/oder dem Empfang eines Informationssignals von einem Kommunikations-Impedanz-Zustand (Z2, Z3) in einen Standby-Impedanz-Zustand (Z4) umgeschaltet wird, der sich von einem Ausgangs-Impedanz-Zustand (Z1) und/ oder von einem Kommunikations-Impedanz-Zustand (Z2, Z3) während der Aussendung eines Informationssignals vom Daten- oder Informationsträger (9) unterscheidet,
**gekennzeichnet durch** die folgenden weiteren Merkmale:
- der Daten- oder Informationsträger (9) ist so aufgebaut, dass die Umschaltung in den Standby-Impedanz-Zustand (Z4), insbesondere nach Abwicklung der Kommunikation mit dem Lese- und/oder Schreibgerät (1), **durch** den Daten- oder Informationsträger (9) selbst initialisiert und/oder gesteuert erfolgt, und
- ein Daten- oder Informationsträger (9), der eine entsprechende Information ausgelesen und/oder empfangen hat und dann in den Standby-Impedanz-Zustand (Z4) umgeschaltet wurde, ist nach einer im Mikrochip (17) gespeicherten und/oder vorgewählten und/oder veränderbaren Zeitdauer oder **durch** ein Aktivierungssignal vom Lese- und/oder Schreibgerät (1) oder dann wieder in seinen Ausgangs-Impedanz-Zustand (Z1) oder zu zumindest einem der beiden Kommunikations-Impedanz-Zuständen (Z2, Z3) dann zurückschaltbar oder wird dann zurückgeschaltet, wenn die Energieversorgung und/oder der Energiezustand des betreffenden Daten- oder Informationsträgers (9) unter einen Minimalwert absinkt.

12. Vorrichtung nach Anspruch 11, **dadurch gekennzeichnet, dass** der Mikrochip (17) im Standby-Impedanz-Zustand (Z4) eine Impedanz aufweist, bei der der Daten- oder Informationsträger (9) weniger Energie aus einem von einer Antenne, insbesondere Reader-Antenne (5) erzeugten elektrischen, magnetischen oder elektromagnetischen Feld aufnimmt als im Ausgangs-Impedanz-Zustand (Z1) und/oder im Kommunikations-Impedanz-Zustand (Z2, Z3), in welchem der Datenoder Informationsträger (9) durch Umschalten zwischen zumindest zwei Impedanz-Zuständen (Z2, Z3) digitalisierte Signale aussendet,

13. Vorrichtung nach Anspruch 11 oder 12, **dadurch gekennzeichnet, dass** der Mikrochip (17) im Standby-Impedanz-Zustand (Z4) eine Impedanz aufweist, bei der der Daten- oder Informationsträger (9) eine Strom- und/oder Potentialverteilung auf der Antenne (15) aufweist, die eine geringere Wechselwirkung mit dem Antennenfeld benachbarter Datenund/oder Informationsträger (9) bewirkt als im Ausgangs-Impedanz-Zustand (Z1) und/oder im Kommunkikations-Impedanz-Zustand (Z2, Z3).

14. Vorrichtung nach einem der Ansprüche 11 bis 13, **dadurch gekennzeichnet, dass** der Mikrochip (17) einen Ausgangs-Impedanz-Zustand (Z1) aufweist, der unterschiedlich ist zu den Kommunikations-Impedanz-Zuständen (Z2, Z3) während der Kommunikationsphase.

15. Vorrichtung nach einem der Ansprüche 11 bis 14, **dadurch gekennzeichnet, dass** der Daten- oder Informationsträger (9) einen Ausgangs-Impedanz-Zustand (Z1) aufweist, der einem der beiden Kommunikations-Impedanz-Zuständen (Z2, Z3) entspricht, die der Daten- oder Informationsträger (9) während der Kommunikations-Phase einnimmt.

16. Vorrichtung nach einem der Ansprüche 11 bis 15, **dadurch gekennzeichnet, dass** ein Daten- oder Informationsträger (9), der eine entsprechende Information ausgelesen und/oder empfangen hat, in einen Standby-Impedanz-Zustand-(Z4) umschaltbar ist bzw. umgeschaltet wird, in welchem er weniger Energie bezüglich von anderen Daten- oder Informationsträgern (9) ausgesandten Signalen aufnimmt als ein Daten- oder Informationsträger (9), der sich in einem der beiden Kommunikations-Impedanz-Zuständen (Z2, Z3) oder im Ausgangs-Impedanz-Zustand (Z1) befindet.

17. Vorrichtung nach einem der Ansprüche 11 bis 16, **dadurch gekennzeichnet, dass** nach dem Auslesen und/oder Schreiben eines Informationssignals von dem Daten- oder Informationsträger (9) vor der Umschaltung in den Standby-Impedanz-Zustand (Z4) eine oder mehrere weitere Umschaltungen zunächst zum Ausgangs-Impedanz-Zustand (Z1) und/ oder erneut zu zumindest einem der beiden Kommunikations-Impedanz-Zuständen (Z2, Z3) erfolgt.

18. Vorrichtung nach einem der Ansprüche 11 bis 17, **dadurch gekennzeichnet, dass** eine Umschaltung in den Standby-Impedanz-Zustand (Z4) von einem auf dem Daten- oder Informationsträger (9) vorgesehenen Mikrochip durchführbar ist bzw. durchgeführt wird.

19. Vorrichtung nach einem der Ansprüche 11 bis 18, **dadurch gekennzeichnet, dass** der Daten- oder Informationsträger (9) so aufgebaut ist, dass die Umschaltung in den Standby-Impedanz-Zustand (Z4) durch den Daten- oder Informationsträger (9) ohne ein vom Lese- und/oder Schreibgerät (1) vorliegendes Steuersignal erfolgt.

## Claims

1. Method for the contact-free transmission of data from and/or to a large number of data or information carriers (9), preferably in the form of RFID tags or transponders, comprising the following method steps:
- transmitting one or more interrogation and/or write signals to one or more data or information carriers (9), in particular via an antenna arrangement (5) which is associated with or attached to a read and/or write device (1),
- reading information from and/or writing information to an individual data or information carrier (9), in that a corresponding information signal is sent and/or received by the data or information carrier (9) via an antenna (15) located on the data or information carrier (9),
- after the exchange of a piece of information between a read and/or write device (1) and a data or information carrier (9), said carrier is switched into a standby impedance state (Z4) to reduce an undesired interaction with the antenna field of adjacent data or information carriers (9), this state being distinguished from an initial impedance state (Z1) and communication impedance states (Z2, Z3) during the transmission of an information signal from the data or information carrier (9) or the reception of an information signal by the data or information carrier (9),
**characterised by** the following further features:
- switching into the standby impedance state (Z4), in particular after the completion of the communication with the read and/or write device (1), is carried out with initialisation and/or control by the data or information carrier (9) itself, and
- the data or information carrier (9) which has read and/or received a corresponding piece of information and has then been switched into the standby impedance state (Z4) is switched back into its initial impedance state (Z1) or into at least one of the two communication impedance states (Z2, Z3) after a duration which is stored and/or pre-selectable and/or alterable in a microchip (17) or by an activation signal from the read and/or write device (1) or when the energy supply and/or the energy state of the relevant data or information carrier (9) falls below a minimal value.

2. Method according to claim 1, **characterised in that** the standby impedance state (Z4) is selected in such a way that the data or information carrier (9) takes up less energy from a reader antenna (5) in this state than in the initial impedance state (Z1) and/or in the communication impedance state (Z2, Z3), in which the data or information carrier (9) transmits digitalised signals by switching between at least two impedance states (Z2, Z3).

3. Method according to either claim 1 or claim 2, **characterised in that** the standby impedance state (Z4) is selected in such a way that, in this state, the data or information carrier (9) comprises a current and/or potential distribution on the antenna (15) which causes a lesser interaction with the antenna field of adjacent data or information carriers (9) than in the initial impedance state (Z1) and/or in the communication impedance state (Z2, Z3).

4. Method according to any one of claims 1 to 3, **characterised in that** the data or information carrier (9) comprises an initial impedance state (Z1) which is different from the communication impedance states (Z2, Z3) during the communication phase.

5. Method according to any one of claims 1 to 4, **characterised in that** the data or information carrier (9) comprises an initial impedance state (Z1) which corresponds to one of the two communication impedance states (Z2, Z3) which the data or information carrier (9) assumes during the communication phase.

6. Method according to any one of claims 1 to 5, **characterised in that** a data or information carrier (9) which has read or received a corresponding piece of information is then switched into a standby impedance state (Z4), in which it takes up less energy, in relation to signals transmitted by other data or information carriers (9), than a data or information carrier (9) which is in one of the two communication impedance states (Z2, Z3) or in the initial impedance state (Z1).

7. Method according to any one of claims 1 to 6, **characterised in that** a data or information carrier (9) which has read or received a corresponding piece of information is then switched into a standby impedance state (Z4), in which the state of the current and/or potential distribution on the antenna causes a lesser interaction with the antenna field of adjacent data or information carriers (9) than in a data or information carrier (9) which is in one of the two communication impedance states (Z2, Z3) or in the initial impedance state (Z1).

8. Method according to any one of claims 1 to 7, **characterised in that** after an information signal is read or received by the data or information carrier (9) before switching into the standby impedance state (Z4), one or more further switchings take place, initially into the initial impedance state (Z1) and optionally into at least one of the two communication impedance states (Z2, Z3).

9. Method according to any one of claims 1 to 8, **characterised in that** switching into the standby impedance state (Z4) is carried out by a microchip provided on the data or information carrier (9).

10. Method according to any one of claims 1 to 9, **characterised in that** switching into the standby impedance state (Z4) is carried out without a control signal provided by the read and/or write device (1).

11. Device for the contact-free transmission of data from a large number of data or information carriers (9), preferably in the form of RFID tags or transponders, comprising the following features:
- a read and/or write device (1) is provided which comprises one or more antennae (5) or to which one or more antennae (5) can be attached, it being possible to transmit interrogation and/or write signals to one or more data or information carriers (9) via said antennae,
- a plurality of data and/or information carriers (9) are provided, on which there is contained and/or stored information which can be read by the data or information carrier (9), in particular after an interrogation signal is received by the transmission of an information signal, or to which information can be saved, in particular after a write signal is received,
- the data or information carrier (9) comprises a microchip (17) which can assume different impedance states (Z1; Z2; Z3; Z4), and which is switched, after an information signal is transmitted and/or received, from a communication impedance state (Z2, Z3) into a standby impedance state (Z4) which is distinguished from an initial impedance state (Z1) and/or from a communication impedance state (Z2, Z3) during the transmission of an information signal from the data or information carrier (9),
**characterised by** the following further features:
- the data or information carrier (9) is constructed in such a way that switching into the standby impedance state (Z4), in particular after the completion of the communication with the read and/or write device (1), is carried out with initialisation and/or control by the data or information carrier (9) itself, and
- a data or information carrier (9) which has read and/or received a corresponding piece of information and has then been switched into the standby impedance state (Z4) can be or is switched back again into its initial impedance state (Z1) or into at least one of the two communication impedance states (Z2, Z3) after a duration which is stored and/or pre-selected and/or alterable in a microchip (17) or by an activation signal from the read and/or write device (1) or when the energy supply and/or the energy state of the relevant data or information carrier (9) falls below a minimal value.

12. Device according to claim 11, **characterised in that** in the standby impedance state (Z4), the microchip (17) has an impedance such that the data or information carrier (9) takes up less energy from an electric, magnetic or electromagnetic field produced by an antenna, in particular a reader antenna (5), than in the initial impedance state (Z1) and/or in the communication impedance state (Z2, Z3), in which the data or information carrier (9) transmits digitalised signals by switching between at least two impedance states (Z2, Z3).

13. Device according to either claim 11 or claim 12, **characterised in that** in the standby impedance state (Z4), the microchip (17) has an impedance such that the data or information carrier (9) comprises a current and/or potential distribution on the antenna (15) which causes a lesser interaction with the antenna field of adjacent data or information carriers (9) than in the initial impedance state (Z1) and/or in the communication impedance state (Z2, Z3).

14. Device according to any one of claims 11 to 13, **characterised in that** the microchip (17) comprises an initial impedance state (Z1) which is different from the communication impedance states (Z2, Z3) during the communication phase.

15. Device according to any one of claims 11 to 14, **characterised in that** the data or information carrier (9) comprises an initial impedance state (Z1) which corresponds to one of the two communication impedance states (Z2, Z3) which the data or information carrier (9) assumes during the communication phase.

16. Device according to any one of claims 11 to 15, **characterised in that** a data or information carrier (9) which has read and/or received a corresponding piece of information can be or is switched into a standby impedance state (Z4), in which it takes up less energy, in relation to signals transmitted by other data or information carriers (9), than a data or information carrier (9) which is in one of the two communication impedance states (Z2, Z3) or in the initial impedance state (Z1).

17. Device according to any one of claims 11 to 16, **characterised in that** after an information signal is read and/or written by the data or information carrier (9) before switching into the standby impedance state (Z4), one or more further switchings take place, initially into the initial impedance state (Z1) and/or again into at least one of the two communication impedance states (Z2, Z3).

18. Device according to any one of claims 11 to 17, **characterised in that** switching into the standby impedance state (Z4) can be or is carried out by a microchip provided on the data or information carrier (9).

19. Device according to any one of claims 11 to 18, **characterised in that** the data or information carrier (9) is constructed in such a way that switching into the standby impedance state (Z4) is carried out by the data or information carrier (9) itself, without a control signal provided by the read and/or write device (1).

## Revendications

1. Procédé pour la transmission sans contact de données depuis et/ou vers une pluralité de supports de données ou d'informations (9), de préférence sous la forme d'étiquettes RFID ou de transpondeurs, avec les étapes de procédé suivantes :
- émission d'un ou plusieurs signaux d'interrogation et/ou d'écriture vers un ou plusieurs supports de données ou d'informations (9), en particulier via un agencement à antenne (5) appartenant à un appareil de lecture et/ou écriture (1) ou raccordé à celui-ci,
- lecture d'informations depuis et/ou écriture d'informations sur un support de données ou d'informations individuel (9), par émission et/ou réception depuis le support de données ou d'informations (9) d'un signal d'informations correspondant via une antenne (15) qui se trouve sur le support de données ou d'informations (9),
- après échange d'une information entre un appareil de lecture et/ou d'écriture (20) et un support de données ou d'informations (9), celui-ci est commuté vers un état d'impédance de repos (Z4) afin de réduire une interaction non désirée avec le champ d'antenne de supports de données ou d'informations (9) voisins, état qui diffère d'un état d'impédance de départ (Z1) ainsi que d'états d'impédance de communication (Z2, Z3) pendant l'émission d'un signal d'information depuis le support de données ou d'informations (9) ou respectivement pendant la réception d'un signal d'informations par le support de données ou d'informations (9),
**caractérisé par** les caractéristiques suivantes:
- la commutation vers l'état d'impédance de repos (Z4), en particulier après dénouement de la communication avec l'appareil de lecture et/ou d'écriture (1), a lieu de manière initialisée et/ou commandée par le support de données ou d'informations (9) lui-même, et
- le support de données ou d'information (9), qui a lu et/ou reçu une information correspondante et qui a été alors commuté vers l'état d'impédance de repos (Z4), est commuté en retour vers son état d'impédance de départ (Z1) ou vers l'un au moins des deux états d'impédance de communication (Z2, Z3) après une durée mémorisée dans une micropuce (17) et/ou présélectionnée et/ou variable, ou bien par un signal d'activation de l'appareil de lecture et/ou d'écriture (1), ou encore quand l'alimentation en énergie et/ou l'état d'énergie du support de données ou d'informations concerné (9) chute au-dessous d'une valeur minimale.

2. Procédé selon la revendication 1, **caractérisé en ce que** l'état d'impédance de repos (Z4) est choisi de telle façon que le support de données ou d'informations (9) absorbe dans cet état moins d'énergie depuis une antenne de lecture (5) que dans l'état d'impédance de départ (Z1) et/ou dans l'état d'impédance de communication (Z2, Z3) dans lequel le support de données ou d'informations (9) émet des signaux numériques par commutation entre au moins deux états d'impédance (Z2, Z3).

3. Procédé selon la revendication 1 ou 2, **caractérisé en ce que** l'état d'impédance de repos (Z4) est choisi de telle façon que, dans cet état, le support de données ou d'informations (9) présente une répartition de courant et/ou de potentiel vers l'antenne (15), qui provoque une interaction plus faible avec le champ d'antenne de supports de données ou d'informations voisins (9) que dans l'état d'impédance de départ (Z1) et/ou dans l'état d'impédance de communication (Z2, Z3).

4. Procédé selon l'une des revendications 1 à 3, **caractérisé en ce que** le support de données ou d'informations (9) présente un état d'impédance de départ (Z1) qui est différent des états d'impédance de communication (Z2, Z3) pendant la phase de communication.

5. Procédé selon l'une des revendications 1 à 4, **caractérisé en ce que** le support de données ou d'informations (9) présente un état d'impédance de départ (Z1) qui correspond à l'un des deux états d'impédance de communication (Z2, Z3) que le support de données ou d'informations (9) occupe pendant la phase de communication.

6. Procédé selon l'une des revendications 1 à 5, **caractérisé en ce qu'**un support de données ou d'informations (9), qui a lu ou reçu une information correspondante, est commuté vers un état d'impédance de repos (Z4) dans lequel il absorbe moins d'énergie à l'égard de signaux émis par d'autres supports de données ou d'informations (9) qu'un support de données ou d'informations (9) qui se trouve dans l'un des deux états d'impédance de communication (Z2, Z3) ou dans l'état d'impédance de départ (Z1).

7. Procédé selon l'une des revendications 1 à 6, **caractérisé en ce qu'**un support de données ou d'informations (9) qui a lu ou reçu une information correspondante est commuté vers un état d'impédance de repos (Z4), dans lequel l'état de la répartition de courant et/ou de potentiel vers l'antenne provoque une interaction plus faible avec le champ d'antenne de supports de données et/ou d'informations voisins (9), comparée avec un support de données ou d'informations (9) qui se trouve dans l'un des deux états d'impédance de communication (Z2, Z3) ou dans l'état d'impédance de départ (Z1).

8. Procédé selon l'une des revendications 1 à 7, **caractérisé en ce qu'**après lecture ou réception d'un signal d'information par le support de données ou d'informations (9), avant la commutation vers l'état d'impédance de repos (Z4), en procède à une ou plusieurs autres commutations tout d'abord vers l'état d'impédance de départ (Z1) et le cas échéant vers l'un au moins des deux états d'impédance de communication (Z2, Z3).

9. Procédé selon l'une des revendications 1 à 8, **caractérisé en ce que** l'on exécute une commutation vers l'état d'impédance de repos (Z4) au moyen d'une micropuce prévue sur le support de données ou d'informations (9).

10. Procédé selon l'une des revendications 1 à 9, **caractérisé en ce que** la commutation vers l'état d'impédance de repos (Z4) a lieu en l'absence d'un signal de commande présenté par l'appareil de lecture et/ou d'écriture (1).

11. Appareil pour la transmission sans contact de données depuis une pluralité de supports de données ou d'informations (9), de préférence sous la forme d'étiquettes RFID ou de transpondeurs, avec les éléments suivants :
- il est prévu un appareil de lecture et/ou d'écriture (1), lequel comprend une ou plusieurs antennes (5) ou auxquels une ou plusieurs antennes (5) sont raccordées, au moyen desquelles des signaux d'interrogation et/ou d'écriture peuvent être émis vers un ou plusieurs supports de données ou d'informations (9),
- il est prévu une pluralité de supports de données ou d'informations (9), sur lesquels des informations sont contenues et/ou mémorisées, lesquelles peuvent être lues par le support de données ou d'informations (9), en particulier après réception d'un signal d'interrogation par émission d'un signal d'information, ou sur lesquels des informations peuvent être mémorisées, en particulier après réception d'un signal d'écriture,
- le support de données ou d'informations (9) comprend une micropuce (17), laquelle peut adopter différents états d'impédance (Z1 ; Z2, Z3 ; Z4), et qui, après émission et/ou réception d'un signal d'information, est commutée depuis un état d'impédance de communication (Z2, Z3) vers un état d'impédance de repos (Z4), qui diffère d'un état d'impédance de départ (Z1) et/ou d'un état d'impédance de communication (Z2, Z3) pendant l'émission d'un signal d'information depuis le support de données ou d'informations (9),
**caractérisé par** les caractéristiques suivantes :
- le support de données ou d'informations (9) est réalisé de telle façon que la commutation vers l'état d'impédance de repos (Z4), en particulier après dénouement de la communication avec l'appareil de lecture et/ou d'écriture (1), a lieu de manière initialisée et/ou commandée par le support de données ou d'informations (9) lui-même, et
- un support de données ou d'informations (9) qui a lu et/ou reçu une information correspondante et qui a été alors commuté vers l'état d'impédance de repos (Z4) est commuté ou commutable en retour vers son état d'impédance de départ (Z1) ou vers l'un au moins des deux états d'impédance de communication (Z2, Z3) après une durée mémorisée dans la micropuce (17) et/ou présélectionnée et/ou variable, ou bien par un signal d'activation de l'appareil de lecture et/ou d'écriture (1), ou encore quand l'alimentation en énergie et/ou l'état d'énergie du support de données ou d'informations concerné (9) chute au-dessous d'une valeur minimale.

12. Appareil selon la revendication 11, **caractérisé en ce que**, dans l'état d'impédance de repos (Z4) la micropuce (17) présente une impédance pour laquelle le support de données ou d'informations (9) absorbe moins d'énergie depuis un champ électrique, magnétique ou électromagnétique engendré par une antenne, en particulier une antenne de lecture (5) que dans l'état d'impédance de départ (Z1) et/ou dans l'état d'impédance de communication (Z2, Z3) dans lequel le support de données ou d'informations (9) émet les signaux numériques par commutation entre au moins deux états d'impédance (Z2, Z3).

13. Appareil selon la revendication 11 ou 12, **caractérisé en ce que**, dans l'état d'impédance de repos (Z4), la micropuce (17) présente une impédance pour laquelle le support de données ou d'informations (9) présente une répartition de courant et/ou de potentiel vers l'antenne (15) qui provoque une interaction plus faible avec le champ d'antenne de supports de données et/ou d'informations voisins (9) que dans l'état d'impédance de départ (Z1) et/ou dans l'état d'impédance de communication (Z2, Z3).

14. Appareil selon l'une des revendications 11 à 13, **caractérisé en ce que** la micropuce (17) présente un état d'impédance de départ (Z1) qui est différent des états d'impédance de communication (Z2, Z3) pendant la phase de communication.

15. Appareil selon l'une des revendications 11 à 14, **caractérisé en ce que** le support de données ou d'informations (9) présente un état d'impédance de départ (Z1) qui correspond à l'un des deux états d'impédance de communication (Z2, Z3) que le support de données ou d'informations (9) occupe pendant la phase de communication.

16. Appareil selon l'une des revendications 11 à 15, **caractérisé en ce qu'**un support de données ou d'informations (9) qui a lu et/ou reçu une information correspondante est commuté ou commutable vers un état d'impédance de repos (Z4) dans lequel il absorbe moins d'énergie vis-à-vis de signaux émis par d'autres supports de données ou d'informations (9) qu'un support de données ou d'informations (9) qui se trouve dans l'un des deux états d'impédance de communication (Z2, Z3) ou dans l'état d'impédance de départ (Z1).

17. Appareil selon l'une des revendications 11 à 16, **caractérisé en ce que**, après lecture et/ou écriture d'un signal d'information depuis ou vers le support de données ou d'informations (9), on procède avant la commutation vers l'état d'impédance de repos (Z4) à une ou plusieurs autres commutations tout d'abord vers l'état d'impédance de départ (Z1) et/ou à nouveau vers l'un au moins des deux états d'impédance de communication (Z2, Z3).

18. Appareil selon l'une des revendications 11 à 17, **caractérisé en ce qu'**une commutation vers l'état d'impédance de repos (Z4) est exécutée ou exécutable par une micropuce prévue sur le support de données ou d'informations (9).

19. Appareil selon l'une des revendications 11 à 18, **caractérisé en ce que** le support de données ou d'informations (9) est réalisé de telle façon que la commutation vers l'état d'impédance de repos (Z4) a lieu au moyen du support de données ou d'informations (9) sans un signal de commande présenté par l'appareil de lecture et/ou d'écriture (1).
